# EUROPEAN PATENT APPLICATION

(11) **EP 3 654 724 A1**
(43) Date of publication of application: **20.05.2020**
(21) Application number: 18843440.1
(22) Date of filing: 10.08.2018
(51) Int. Cl.: H04W 74/08, H04W 48/08

(54) **RANDOM ACCESS METHOD, DEVICE AND SYSTEM**

(30) Priority: 11.08.2017 CN 201710687777
(71) Applicant: Huawei Technologies Co., Ltd., Longgang District Shenzhen, Guangdong 518129 (CN)
(72) Inventor: LOU, Chong, Shenzhen Guangdong 518129 (CN); YOU, Chunhua, Shenzhen Guangdong 518129 (CN); HUANG, Qufang, Shenzhen Guangdong 518129 (CN)
(74) Representative: Epping - Hermann - Fischer
(86) International application number: PCT/CN2018/099960
(87) International publication number: WO 2019/029701

(57) **Abstract**

Embodiments of this application provide a random access method, a device, and a system. The method includes: determining, by a terminal device, a receiving parameter of first data, where the first data is at least one of the following data: an SS-block, a PBCH, a CSI-RS, downlink control information of a random access response, a random access response, and the like; receiving, by the terminal device, a contention resolution message by using the receiving parameter; and determining, by the terminal device, success of contention resolution of random access or success of random access based on the contention resolution message. In this application, success of contention resolution of random access or success of random access by the terminal device can be implemented for a multi-TRP scenario.

## Description

This application claims priority to Chinese Patent Application No. 201710687777.3, filed with the Chinese Patent Office on August 11, 2017, and entitled "RANDOM ACCESS METHOD, DEVICE, AND SYSTEM", which is incorporated herein by reference in its entirety.

### TECHNICAL FIELD

Embodiments of this application relate to the communications technologies, and in particular, to a random access method, a device, and a system.

### BACKGROUND

In real-word application, a terminal device needs to obtain uplink time synchronization before transmitting uplink data. The uplink time synchronization is obtained by establishing a communications connection by the terminal device and a network device by using a random access procedure (Random Access Procedure, RAP).

An existing random access procedure includes the following steps: sending, by the terminal device, a random access preamble (Msg 1) to the network device; receiving, by the terminal device, a random access response (Msg 2) sent by the network device; sending, by the terminal device, a message 3 (Msg 3) to the network device; and receiving, by the terminal device, a message 4 (Msg 4), that is, a contention resolution (contention resolution) message, sent by the network device. For example, the network device may indicate a terminal device succeeding in the contention resolution by using a physical downlink control channel (Physical Downlink control channel, PDCCH) scrambled by using a cell radio network temporary identifier (Cell radio network temporary identifier, C-RNTI) on an SPCell (a primary cell in a CA scenario, a primary cell of a primary cell group in a DC scenario, and primary and secondary cells of a secondary cell group in the DC scenario).

However, the prior art is only dedicated for a scenario with one transmission and receiving point (Transmission and receiving point, TRP). For a multi-TRP scenario introduced in the new radio (New Radio, NR) technology, the prior art does not provide effective solutions of the contention resolution in the random access procedure.

### SUMMARY

Embodiments of this application provide a random access method, a device, and a system, so that success of contention resolution of random access or success of random access by a terminal device can be implemented for a multi-TRP scenario.

According to a first aspect, an embodiment of this application provides a random access method, including: determining, by a terminal device, a receiving parameter of first data; receiving, by the terminal device, a contention resolution message by using the receiving parameter; and determining, by the terminal device, success of contention resolution of random access or success of random access based on the contention resolution message. The first data is at least one of the following data: an SS-block, a PBCH, a CSI-RS, downlink control information of a random access response, a random access response, and the like.

Optionally, before the receiving, by the terminal device, a contention resolution message by using the receiving parameter, the random access method further includes: receiving, by the terminal device, configuration information sent by a network device. The configuration information includes at least one piece of random access configuration, and a correlation between the first data and the random access configuration. The random access configuration may include a random access time-frequency resource and/or a preamble index.

Optionally, before the receiving, by the terminal device, a contention resolution message by using the receiving parameter, the random access method further includes: sending, by the terminal device, a preamble to the network device based on the random access configuration on the random access time-frequency resource. There is a correspondence between the preamble and the preamble index. Herein, the random access configuration includes at least one of the random access time-frequency resource and the preamble index corresponding to the sent preamble.

Optionally, before the receiving, by the terminal device, a contention resolution message by using the receiving parameter, the random access method further includes: receiving, by the terminal device, a random access response sent by the network device. A receiving parameter of the random access response is the same as the receiving parameter of the first data, and/or a receiving parameter of the downlink control information of the random access response is the same as the receiving parameter of the first data.

According to a second aspect, an embodiment of this application provides a random access method, including: receiving, by a network device, a preamble sent by a terminal device on a random access time-frequency resource; determining, by the network device, a sending parameter of first data based on the random access time-frequency resource and/or the preamble; and sending, by the network device, a contention resolution message to the terminal device by using the sending parameter, where the contention resolution message is used to instruct the terminal device to determine success of contention resolution of random access or success of random access. The first data is at least one of the following data: an SS-block, a PBCH, a CSI-RS, downlink control information of a random access response, and a random access response.

Optionally, the determining, by the network device, a sending parameter of first data based on the random access time-frequency resource and/or the preamble includes: determining, by the network device, random access configuration based on the preamble and/or the random access time-frequency resource, where there is a correspondence between the preamble and a preamble index; and determining, by the network device, the sending parameter of the first data based on the random access configuration and a correlation between the first data and the random access configuration.

Optionally, before the sending, by the network device, a contention resolution message to the terminal device by using the sending parameter, the random access method further includes: sending, by the network device, configuration information to the terminal device. The configuration information includes at least one piece of random access configuration, and a correlation between the first data and the random access configuration. The random access configuration may include the random access time-frequency resource and/or the preamble index.

Optionally, before the sending, by the network device, a contention resolution message to the terminal device by using the sending parameter, the random access method further includes: sending, by the network device, the random access response to the terminal device. A sending parameter of the random access response is the same as the sending parameter of the first data, and/or a sending parameter of the downlink control information of the random access response is the same as the sending parameter of the first data.

According to a third aspect, an embodiment of this application provides a random access device, including a determining module and a receiving module. The determining module is configured to determine a receiving parameter of first data; the receiving module is configured to receive a contention resolution message by using the receiving parameter; and the determining module is further configured to determine success of contention resolution of random access or success of random access based on the contention resolution message. The first data is at least one of the following data: an SS-block, a PBCH, a CSI-RS, downlink control information of a random access response, a random access response, and the like.

Optionally, the receiving module is further configured to: before receiving the contention resolution message by using the receiving parameter, receive configuration information sent by a network device. The configuration information includes at least one piece of random access configuration, and a correlation between the first data and the random access configuration. The random access configuration may include a random access time-frequency resource and/or a preamble index.

Optionally, the random access device further includes: a sending module, configured to: before the receiving module receives the contention resolution message by using the receiving parameter, send a preamble to the network device based on the foregoing random access configuration on the random access time-frequency resource. There is a correspondence between the preamble and the preamble index.

Optionally, the receiving module is further configured to: before receiving the contention resolution message by using the receiving parameter, receive a random access response sent by the network device. A receiving parameter of the random access response is the same as the receiving parameter of the first data, and/or a receiving parameter of the downlink control information of the random access response is the same as the receiving parameter of the first data.

According to a fourth aspect, an embodiment of this application provides a random access device, including: a receiving module, configured to receive a preamble sent by a terminal device on a random access time-frequency resource; a determining module, configured to determine a sending parameter of first data based on the random access time-frequency resource and/or the preamble; and a sending module, configured to send a contention resolution message to the terminal device by using the sending parameter, where the contention resolution message is used to instruct the terminal device to determine success of contention resolution of random access or success of random access. The first data is at least one of the following data: an SS-block, a PBCH, a CSI-RS, downlink control information of a random access response, a random access response, and the like.

Optionally, the determining module may be specifically configured to: determine random access configuration based on the preamble and/or the random access time-frequency resource, where there is a correspondence between the preamble and a preamble index; and determine the sending parameter of the first data based on the random access configuration and a correlation between the first data and the random access configuration.

Optionally, the sending module is further configured to: before sending the contention resolution message to the terminal device by using the sending parameter, send configuration information to the terminal device. The configuration information includes at least one piece of random access configuration and a correlation between the first data and the random access configuration. The random access configuration may include the random access time-frequency resource and/or the preamble index.

Optionally, the sending module is further configured to: before sending the contention resolution message to the terminal device by using the sending parameter, send a random access response to the terminal device. A sending parameter of the random access response is the same as the sending parameter of the first data, and/or a sending parameter of the downlink control information of the random access response is the same as the sending parameter of the first data.

According to a fifth aspect, an embodiment of this application provides a terminal device, including: a processor, configured to determine a receiving parameter of first data and send an indication to a transceiver; a transceiver, configured to receive a contention resolution message based on the indication of the processor by using the receiving parameter; and the processor, further configured to determine success of contention resolution of random access or success of random access based on the contention resolution message. The first data is at least one of the following data: an SS-block, a PBCH, a CSI-RS, downlink control information of a random access response, a random access response, and the like.

Optionally, the transceiver is further configured to: before receiving the contention resolution message by using the receiving parameter, receive configuration information sent by a network device, where the configuration information includes at least one piece of random access configuration and a correlation between the first data and the random access configuration, and the random access configuration includes a random access time-frequency resource and/or a preamble index.

Optionally, the transceiver is further configured to: before receiving the contention resolution message by using the receiving parameter, send a preamble to the network device based on the random access configuration on the random access time-frequency resource, where there is a correspondence between the preamble and the preamble index.

Optionally, the transceiver is further configured to: before receiving the contention resolution message by using the receiving parameter, receive the random access response sent by the network device, where a receiving parameter of the random access response is the same as the receiving parameter of the first data, and/or a receiving parameter of the downlink control information of the random access response is the same as the receiving parameter of the first data.

According to a sixth aspect, an embodiment of this application provides a network device, including: a transceiver, configured to receive a preamble sent by a terminal device on a random access time-frequency resource; a processor, configured to determine a sending parameter of first data based on the random access time-frequency resource and/or the preamble and send an indication to the transceiver; and the transceiver, further configured to send a contention resolution message to the terminal device by using the sending parameter based on the indication of the processor, where the contention resolution message is used to instruct the terminal device to determine success of contention resolution of random access or success of random access. The first data is at least one of the following data: an SS-block, a PBCH, a CSI-RS, downlink control information of a random access response, a random access response, and the like.

Optionally, the processor is specifically configured to: determine random access configuration based on the preamble and/or the random access time-frequency resource, where there is a correspondence between the preamble and a preamble index; and determine the sending parameter of the first data based on the random access configuration and a correlation between the first data and the random access configuration.

Optionally, the transceiver is further configured to: before sending the contention resolution message to the terminal device by using the sending parameter, send configuration information to the terminal device, where the configuration information includes at least one piece of random access configuration and a correlation between the first data and the random access configuration, and the random access configuration includes the random access time-frequency resource and/or the preamble index.

Optionally, the transceiver is further configured to: before sending the contention resolution message to the terminal device by using the sending parameter, send the random access response to the terminal device, where a sending parameter of the random access response is the same as the sending parameter of the first data, and/or a sending parameter of the downlink control information of the random access response is the same as the sending parameter of the first data.

Based on any implementation of the first aspect to the sixth aspect of this application:
Optionally, the random access configuration further includes at least one of the following:
   a root sequence index, used to generate a preamble sequence;
   a high speed flag, used to generate a selection preamble;
   a preamble set or a quantity of preambles;
   a preamble power ramp parameter;
   an initial receiving target power of a preamble;
   a maximum quantity of transmission times of the preamble;
   a window length of a random access response; and
   a contention resolution timer of a MAC.
Optionally, the receiving parameter includes at least one of the following parameters:
   an angle of arrival, a dominant angle of arrival, an average angle of arrival, power angular spectrum of the angle of arrival, an angle of direction, power angular spectrum of an angle of departure, a transmit/receive channel correlation, transmit/receive beamforming, a spatial channel correlation, and the like.

Optionally, the sending parameter includes at least one of the following parameters: an angle of departure, an angle of direction, power angular spectrum of the angle of departure, a transmit/receive channel correlation, transmit/receive beamforming, a spatial channel correlation, and the like.

Optionally, the contention resolution message is a downlink control channel carrying an identifier of a terminal device.

According to a seventh aspect, an embodiment of this application provides a terminal device, including: a processor, a memory, and a computer program that is stored on the memory and that can be executed by the processor. The processor executes the computer program to implement the method according to the first aspect.

According to an eighth aspect, an embodiment of this application provides a network device, including: a processor, a memory, and a computer program that is stored on the memory and that can be executed by the processor. The processor executes the computer program to implement the method according to the second aspect.

According to a ninth aspect, an embodiment of this application provides a terminal device, including at least one processing element (or chip) configured to perform the method according to the first aspect.

According to a tenth aspect, an embodiment of this application provides a network device, including at least one processing element (or chip) configured to perform the method according to the second aspect.

According to an eleventh aspect, an embodiment of this application provides a program. The program is configured to perform the method according to the first aspect when executed by a processor of a terminal device.

According to a twelfth aspect, an embodiment of this application provides a program. The program is configured to perform the method according to the second aspect when executed by a processor of a network device.

According to a thirteenth aspect, an embodiment of this application provides a computer program product, including the program according to the eleventh aspect.

According to a fourteenth aspect, an embodiment of this application provides a computer program product, including the program according to the twelfth aspect.

According to a fifteenth aspect, an embodiment of this application provides a computer readable storage medium. When an instruction in the computer readable storage medium is executed by a processor of a terminal device, the terminal device is enabled to perform the method according to the first aspect.

According to a sixteenth aspect, an embodiment of this application provides a computer readable storage medium. When an instruction in the computer readable storage medium is executed by a processor of a network device, the network device is enabled to perform the method according to the second aspect.

According to a seventeenth aspect, an embodiment of this application provides a communications system, including the terminal device according to the fifth aspect and the network device according to the sixth aspect.

The embodiments of this application provide the random access method, the device, and the system. The terminal device receives the contention resolution message by using the receiving parameter of the first data, and determines the success of contention resolution of random access or the success of random access based on the contention resolution message. The first data is at least one of the following data: an SS-block, a CSI-RS, downlink control information of a random access response, and a random access response, so that for a multi-TRP scenario, the terminal device can pertinently distinguish whether the received contention resolution message is a contention resolution message corresponding to current random access. On the one hand, the terminal device does not continue performing random access after receiving the contention resolution message corresponding to the current random access, that is, in the random access procedure, a random access preamble is not sent to the network device any more; on the other hand, the terminal device is enabled to continue performing random access before the contention resolution message corresponding to the current random access is not received, for example, waiting the contention resolution message corresponding to the current random access or resending the random access preamble to the network device, to implement success of the contention resolution of the random access or success of the random access by the terminal device for the multi-TRP scenario.

### BRIEF DESCRIPTION OF DRAWINGS

FIG. 1 is a schematic diagram of a communications system according to an embodiment of this application;
FIG. 2 is a flowchart of a random access method according to an embodiment of this application;
FIG. 3 is a signaling interworking diagram of a random access method according to another embodiment of this application;
FIG. 4 is an application example of a random access method according to an embodiment of this application;
FIG. 5 is a signaling interworking diagram of a random access method according to another embodiment of this application;
FIG. 6 is an application example of a random access method according to another embodiment of this application;
FIG. 7 is a schematic structural diagram of a random access device according to an embodiment of this application;
FIG. 8 is a schematic structural diagram of a random access device according to another embodiment of this application;
FIG. 9 is a schematic structural diagram of a terminal device according to an embodiment of this application; and
FIG. 10 is a schematic structural diagram of a network device according to an embodiment of this application.

### DESCRIPTION OF EMBODIMENTS

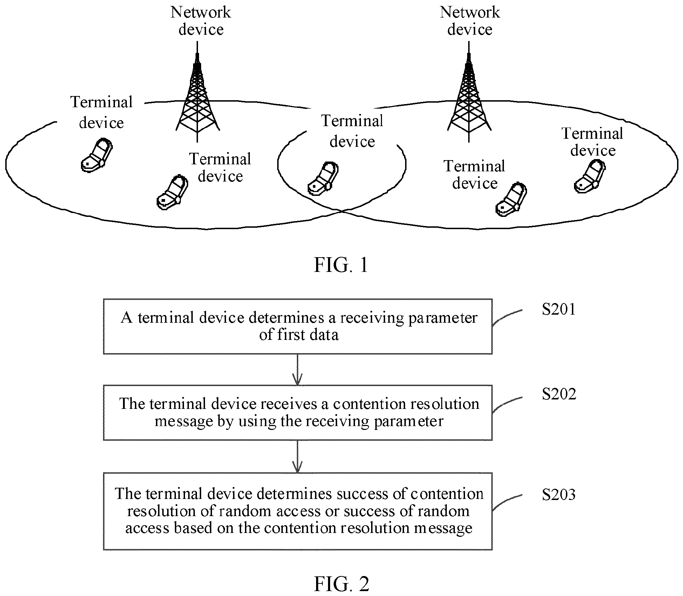

FIG. 1 is a schematic diagram of a communications system according to an embodiment of this application. As shown in FIG. 1, the communications system includes a network device and at least one terminal device. The terminal device is located in a coverage of the network device and communicates with the network device, to implement the technical solutions provided in each embodiment of this application. The communications system in this embodiment may be applicable to a multi-TRP scenario.

In the embodiments of this application, each embodiment is described with reference to the network device and the terminal device. The network device and the terminal device may work on a licensed frequency band or a license-exempt frequency band.

The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a station (STATION, ST) in a wireless local area network (Wireless Local Area Networks, WLAN), or may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA) device, a handheld device having a wireless communications function, a computing device, or another processing device connected to a wireless modem, an in-vehicle device, a wearable device, a terminal device in a next generation communications system, such as the fifth-generation (the fifth-generation, 5G) network or a terminal device in a future evolved public land mobile network (Public Land Mobile Network, PLMN), a terminal device in an NR system, or the like.

As an example but not a limitation, in this embodiment of this application, the terminal device may further be a wearable device. The wearable device may also be referred to as a wearable intelligent device, a general term for wearable devices, such as glasses, a glove, a watch, a cloth, and shoes, developed by performing intelligent designs for daily wear by using wearable technologies. The wearable device is a portable device that is worn directly on a body or integrated into a cloth or an accessory of a user. The wearable device is not only a hardware device, but moreover implements a powerful function through software support, data exchange, and cloud interaction. A generalized wearable intelligent device includes a device with a full function and large size, and can implement all or some functions without depending on a smartphone, such as a smart watch or smart glasses, and a device, such as various smart bracelets or smart jewelry for monitoring vital signs, that focuses on only one type of application function and needs to work with another device such as a smartphone.

In addition, the network device is also referred to as a radio access network (Radio Access Network, RAN) device and is a device for accessing the terminal device into a wireless network. The network device may be an evolved NodeB (Evolutional Node B, eNB or eNodeB), a relay station, an access point in a long term evolution (Long Term Evolution, LTE), a network device in a 5G network, a network device in a future evolved PLMN network, a new radio NodeB (new radio Node B, gNodeB) in an NR system, or the like. This is not limited herein.

In addition, in this embodiment of this application, the network device provides a service for a cell, and the terminal device communicates with the network device by using a transmission resource (for example, a frequency domain resource, or a spectrum resource) used by the cell. The cell may be a cell corresponding to the network device (for example, a base station), and the cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. The small cells have features of small coverage and low transmit power, and are applicable to a service providing a high-rate data transmission.

A random access procedure is usually triggered by one of the following seven events:
1) Establishment of a wireless connection when initially accessed, that is, the terminal device switches from a radio resource control idle (Radio Resource Control Idle, RRC_IDLE) state to an RRC connected (RRC Connected, RRC CONNECTED) state;
2) RRC connection re-establishment procedure (RRC Connection Re-establishment procedure), used to re-establish the RRC connection;
3) Handover (handover), switch from one cell to another cell;
4) In the RRC CONNECTED state, uplink time is in a "non-synchronization" state when downlink data arrives (for example, in this case, a hybrid automatic repeat request HARQ ACK/NACK needs to be replied);
5) In the RRC CONNECTED state, uplink time is in a "non-synchronization" state or there is no available physical uplink control channel (Physical Uplink Shared Channel, PUCCH) resource for scheduling request (Scheduling Request, SR) transmission when uplink data arrives (for example, a measurement report needs to be reported or user data needs to be sent);
6) In the RRC_CONNECTED state, timing advance (timing advance) is needed for positioning the terminal device; and
7) State switching from an RRC_INACTIVE state to the RRC_CONNECTED state.

A terminal device in the RRC_CONNECTED state is a terminal device maintaining an RRC connection between the terminal device and an access network device and a connection between the access network device and a core network device. A terminal device in the RRC_INACTIVE state is a terminal device maintaining the connection between the access network device and the core network device, without the RRC connection between the terminal device and the access network device. A terminal device in the RRC_IDLE state is a terminal device without the connection between the access network device and the core network device and without the RRC connection between the terminal device and the access network device.

The random access procedure includes:
(1) A contention based (Contention based) random access procedure: applicable to the first five types of the foregoing six types of events; and
(2) A non-contention based (Non-contention based or Contention-Free based) random access procedure: applicable to three types: 3), 4), 6), and 7) of the foregoing seven types of events.

A beam (beam) may be understood as a space resource, and may refer to a sending or receiving precoding vector with directionality of energy transmission. In addition, the sending or receiving precoding vector can be identified by using index information. The directionality of energy transmission may refer to performing precoding processing on a to-be-sent signal by using the precoding vector. A signal after the precoding processing has particular space directionality, and a signal after the precoding processing by using the precoding vector has relatively good receive power, for example, a receiving demodulation signal-to-noise ratio is satisfied. The directionality of energy transmission may also refer to that same signals that are received by using the precoding vector and that are sent from different special locations have different receive power. Optionally, a same communications device, such as a terminal device or a network device, may have different precoding vectors, and different communications devices may also have different precoding vectors, that is, correspond to different beams.

For configuration or capabilities of a communications device, one communications device may use one or more of different precoding vectors at a same moment, that is, one or more beams may be formed at the same time. Beam information may be identified by using the index information. Optionally, the index information may correspond to a resource identity (identity, ID) for configuring the terminal device. For example, the index information may correspond to an ID, an index (index), or a resource of a configured channel state information-reference signal (Channel status information Reference Signal, CSI-RS), or may correspond to an ID or a resource of a configured uplink sounding reference signal (Sounding Reference Signal, SRS). Alternatively, optionally, the index information may also be index information explicitly or implicitly carried by a signal or a channel, where the signal or the channel is carried by a beam. For example, the index information includes but is not limited to index information that is of a beam indicated by a synchronous signal or a broadcast channel and that is sent by using the beam. The resource may be at least one of the following: a time domain, a frequency domain, and a code domain (sequence).

It should be understood that the term "and/or" in this specification describes only an association relationship for describing associated objects and represents that three relationships may exist. For example, A and/or B may represent the following three cases: Only A exists, both A and B exist, and only B exists.

FIG. 2 is a flowchart of a random access method according to an embodiment of this application. As shown in FIG. 2, the method in this embodiment includes the following steps.

S201. A terminal device determines a receiving parameter of first data.

The first data may be at least one of the following data: a synchronization signal block (Synchronization Signal block, SS-block), a physical broadcast channel (Physical Broadcast Channel, PBCH), a CSI-RS, downlink control information of a random access response, a random access response, and the like. The CSI-RS is used for channel estimation, beam management, or cell mobility measurement; and the SS-block may include at least one of a primary synchronization signal (Primary Synchronization Signal, PSS), a secondary synchronization signal (Secondary Synchronization Signal, SSS), and the like. Optionally, the SS-block or the CSI-RS may be transmitted by using a beam. The receiving parameter may be an antenna parameter, a receiving parameter of the beam, a spatial receive parameter (spatial receive parameters), or the like.

Specifically, the first data may be data received in the random access procedure, or may be data received before the random access procedure is triggered. This is not limited in this embodiment of this application. In addition, the receiving parameter of the first data is a parameter used when the terminal device receives the first data.

It should also be noted that, the first data is associated with random access configuration determined by the terminal device. For example, when the first data is the SS-block, receiving parameters corresponding to different SS-blocks may be different, and the terminal device does not need to determine the receiving parameters of all the SS-blocks and only needs to determine a receiving parameter of an SS-block associated with a random access time-frequency resource and/or a preamble index used to initiate the random access. For another example, when the first data is the CSI-RS, receiving parameters corresponding to different CSI-RSs may be different, and the terminal device does not need to determine the receiving parameters of all the CSI-RSs and only needs to determine a receiving parameter of a CSI-RS associated with a random access time-frequency resource and/or a preamble index used to initiate the random access. Alternatively, when the first data is the PBCH, receiving parameters corresponding to different PBCHs may be different, and the terminal device does not need to determine the receiving parameters of all the PBCHs and only needs to determine a receiving parameter of a PBCH associated with a random access time-frequency resource and/or a preamble index used to initiate the random access. In addition, the terminal device may distinguish the different SS-blocks based on identifiers of the SS-blocks. Similarly, the terminal device may distinguish the different CSI-RSs based on configured identifiers of the CSI-RSs.

The terminal device determines the receiving parameter of the first data before the random access procedure is triggered or in the random access procedure. Optionally, the terminal device stores the receiving parameter of the first data. Optionally, the receiving parameter may include at least one of the following parameters: an angle of arrival (angle of arrival, AoA), a dominant AoA (Dominant AoA), an average AoA (average AoA), power angular spectrum (Power Angular Spectrum, PAS) of the angle of arrival, an angle of direction (angle of Direction, AOD), power angular spectrum of an angle of departure, a transmit/receive channel correlation (transmit/receive channel correlation), transmit/receive beamforming (transmit/receive beamforming), a spatial channel correlation, and the like.

S202. The terminal device receives a contention resolution message by using the receiving parameter.

In the random access procedure, the terminal device receives the contention resolution message from a network device by using the foregoing determined receiving parameter of the first data. The contention resolution message is sent by the network device to the terminal device.

In specific implementation, the contention resolution message may be a downlink control channel carrying an identifier of the terminal device. Alternatively, the contention resolution message carries some or all information of a message 3 sent by the terminal device, to specify a terminal device succeeding in contention of the random access. For example, the contention resolution message is a downlink control channel at a bit at which a cyclic redundancy check (Cyclic Redundancy Check, CRC) is scrambled by using the identifier of the terminal device. The downlink control channel is used to transmit downlink assignment (downlink assignment) and/or uplink grant (uplink grant). For example, the downlink control channel may be a PDCCH. The downlink assignment is used to indicate a transmission resource of downlink data, and the uplink grant is used to assign a transmission resource of uplink data. If the contention resolution message is the downlink assignment, the terminal device receives the downlink data based on the downlink assignment, and sends a feedback of the downlink data to the network device, where the feedback is used to inform the network device whether the downlink data is successfully decoded by the terminal device; and if the contention resolution message is the uplink grant, the terminal device sends the uplink data to the network device based on the uplink grant. If the contention resolution message is some or all information of the message 3 sent by the terminal device, the terminal device sends a feedback of the contention resolution message to the network device, where the feedback is used to inform the network device that the contention resolution message is successfully decoded by the terminal device; and if the decoding is not successful, the terminal device does not need to send the feedback to the network device.

The identifier of the terminal device is an identifier of the terminal device in a cell. Optionally, the identifier of the terminal device is a cell radio network temporary identifier (cell radio network temporary identifier, C-RNTI).

S203. The terminal device determines success of contention resolution of random access or success of random access based on the contention resolution message.

For example, if the terminal device determines that the contention resolution message carries the identifier of the terminal device, it is considered that contention resolution of random access is successful or it is determined that random access is successful; or if the terminal device determines that the contention resolution message carries some or all information of the message 3 sent by the terminal device, it is considered that contention resolution of random access is successful or it is determined that random access is successful.

In this embodiment, the terminal device receives the contention resolution message by using the receiving parameter of the first data, and determines success of contention resolution of random access or success of random access based on the contention resolution message. The first data is at least one of the following data: an SS-block, a CSI-RS, downlink control information of a random access response, and a random access response, so that for a multi-TRP scenario, the terminal device can pertinently distinguish whether the received contention resolution message is a contention resolution message corresponding to current random access. On the one hand, the terminal device does not continue performing random access after receiving the contention resolution message corresponding to the current random access, that is, in the random access procedure, a random access preamble is not sent to the network device any more; on the other hand, the terminal device is enabled to continue performing random access before the contention resolution message corresponding to the current random access is not received, for example, waiting the contention resolution message corresponding the current random access or resending the random access preamble to the network device, to implement success of the contention resolution of the random access or success of the random access by the terminal device for the multi-TRP scenario.

The following descriptions are made with reference to interaction between the network device and the terminal device.

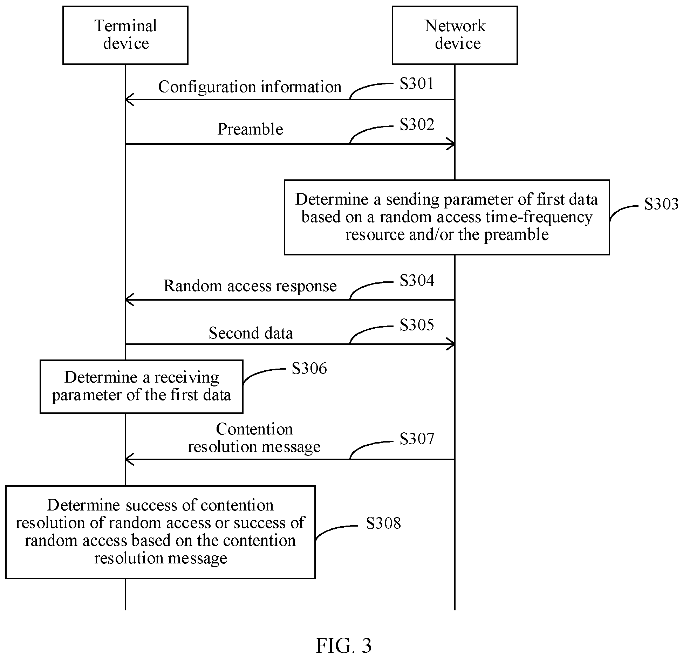

FIG. 3 is a signaling interworking diagram of a random access method according to another embodiment of this application. As shown in FIG. 3, the random access method includes the following steps.

S301. A terminal device receives configuration information sent by a network device.

The configuration information includes at least one piece of random access configuration, and a correlation between first data and the random access configuration. The random access configuration may include a random access time-frequency resource and/or a preamble index. In addition, there may be one or more random access time-frequency resources and/or preamble indexes. This is not limited in this application. The step is optional. S301 is performed only in first-time random access or in new random access after the configuration information is updated.

For example, the configuration information includes random access configuration 1, random access configuration 2, a correlation 1 between the random access configuration 1 and an SS-block 1, and a correlation 2 between the random access configuration 2 and an SS-block 2. In this case, if the terminal device determines to perform random access based on the random access configuration 1, the terminal device determines that the SS-block 1 associated with the random access configuration 1 is the first data described in this specification. In subsequent S305, the terminal device determines a receiving parameter of the first data, and it may be understood as: the terminal device determines a receiving parameter of the SS-block 1.

Optionally, the random access configuration may further include at least one of the following: a root sequence index (rootSequenceIndex), used to generate a preamble sequence; a high speed flag (highSpeedFlag), used to generate a selection preamble; a preamble set or a quantity of preambles; a preamble power ramp parameter; an initial receiving target power of a preamble; a maximum quantity of transmission times of the preamble (PreambleTransMax); a window length of a random access response (ra-ResponseWindowSize); a contention resolution timer of a medium access control (Medium Access Control, MAC), and the like.

S302. The terminal device sends a preamble to the network device based on the random access configuration included in the configuration information on the random access time-frequency resource.

There is a correspondence between the preamble (Preamble) and the preamble index. For a relationship between the preamble and the preamble index, refer to the prior art, and details are not described herein again. The preamble, for example, is the preamble sequence.

For example, if the preamble index available for the terminal device includes a preamble index 1, a preamble index 2, and a preamble index 3, the preamble index corresponding to the preamble sent by the terminal device is in a range of the preamble index 1, the preamble index 2, and the preamble index 3. To be specific, the preamble index corresponding to the preamble sent by the terminal device is one of the foregoing three preamble indexes.

The terminal device needs the following conditions to successfully send the preamble:
1) Select a preamble index;
2) Select a random access time-frequency resource used to send the preamble;
3) Determine a corresponding random access radio network temporary identifier (Random Access Radio Network Temporary Identifier, RA-RNTI); and
4) Determine a target receiving power (PREAMBLE_RECEIVED_TARGET_POWER).

The foregoing conditions may be predefined, configured by higher layer signaling, or obtained or determined in another manner. This is not limited in this application.

With reference to the foregoing descriptions, the random access configuration may include the random access time-frequency resource and/or the preamble index, and the step may be understood as follows.

It may be understood that, when the random access configuration includes the random access time-frequency resource, the step is specifically that the terminal device sends the preamble to the network device on any random access time-frequency resource included in the random access configuration. In this case, the preamble is a public preamble, that is, the preamble does not need to be associated with the first data and may be obtained through another configuration.

When the random access configuration includes the preamble index, the step is specifically that the terminal device sends the preamble corresponding to any preamble index included in the random access configuration, to the network device on the random access time-frequency resource. In this case, the random access time-frequency resource is a public random access time-frequency resource, that is, the random access time-frequency resource does not need to be associated with the first data and may be obtained by using other configuration.

When the random access configuration includes the random access time-frequency resource and the preamble index, the step is specifically that the terminal device sends the preamble corresponding to any preamble index included in the random access configuration to the network device on any random access time-frequency resource included in the random access configuration.

For example, the configuration information includes two pieces of random access configuration: random access configuration 1 and random access configuration 2, where the random access configuration 1 is associated with the SS-block 1, and the random access configuration 2 is associated with the SS-block 2. The terminal device selects the SS-block 2 based on downlink measurement, to perform random access. This is specifically reflected as: the terminal device uses the random access configuration associated with the SS-block 2 to perform random access. For example, the terminal device sends the preamble to the network device by using any random access time-frequency resource included in the random access configuration associated with the SS-block 2.

Correspondingly, the network device receives the preamble sent by the terminal device on the random access time-frequency resource.

S303. The network device determines a sending parameter of the first data based on the random access time-frequency resource and/or the preamble.

Optionally, the step specifically includes: determining, by the network device, the random access configuration based on the preamble sent by the terminal device and/or the random access time-frequency resource used to send the preamble, where there is a correspondence between the preamble and the preamble index; and determining, by the network device, the sending parameter of the first data based on the determined random access configuration and a correlation between the first data and the random access configuration.

Because at least one of the preamble sent by the terminal device and the random access time-frequency resource used to send the preamble is included or corresponds to the determined random access configuration, the random access configuration may be determined based on the preamble sent by the terminal device and the random access time-frequency resource used to send the preamble. In addition, as described above, the configuration information includes the random access configuration and the correlation between the first data and the random access configuration. Therefore, the network device may determine the first data based on the determined random access configuration and the correlation between the first data and the random access configuration, and thereby determine the sending parameter of the first data.

The sending parameter may include at least one of the following parameters: an angle of departure, an angle of direction, power angular spectrum of the angle of departure, a transmit/receive channel correlation, transmit/receive beamforming, a spatial channel correlation, and the like.

S304. The network device sends a random access response to the terminal device.

A sending parameter of the random access response is the same as the sending parameter of the first data, and/or, a sending parameter of downlink control information of the random access response is the same as the sending parameter of the first data.

Correspondingly, the terminal device receives the random access response sent by the network device.

A receiving parameter of the random access response is the same as the receiving parameter of the first data, and/or, a receiving parameter of downlink control information of the random access response is the same as the receiving parameter of the first data. For example, the terminal device receives the random access response of the network device to the preamble by using a receiving parameter of an SS-block or a CSI-RS.

Optionally, after sending the preamble, the terminal device monitors a PDCCH within a time window of the random access response based on a corresponding RA-RNTI, to receive the random access response to the preamble. If the terminal device does not receive the random access response replied by the network device within the time window of the random access response, the terminal device considers that the random access procedure fails.

For example, the time window of the random access response starts from a subframe sending the preamble (if the preamble covers a plurality of subframes on a time domain, calculate a last subframe) + 3 subframes, and continues a quantity of subframes the same as a size of the time window of the random access response.

The random access response includes uplink grant. Optionally, the random access response further includes an uplink timing advance. The uplink grant includes a physical resource. Optionally, the uplink grant further includes at least one of the following: a modulation and coding scheme (Modulation and Code Scheme, MCS), a channel quality information (channel quality information, CQI) request, and the like.

Further, the random access response may further be configured to trigger the terminal device to receive the CSI-RS or measure the CSI-RS.

S305. The terminal device sends second data to the network device.

The second data includes a cell identifier of the terminal device. The second data may specifically be data similar to the message 3, including the message 3. In addition, because states of the terminal device and application scenarios of the terminal device are different, the second data may also be different.

In specific implementation, the terminal device may send the second data to the network device based on the uplink grant; or the terminal device may send the second data to the network device based on the uplink grant and the uplink timing advance.

Optionally, the second data may further include a beam identifier. Specifically, the terminal device performs beam measurement on the CSI-RS based on the random access response, determines a beam having a best or better measurement result, and adds a beam identifier of the beam to the second data. If the terminal device performs random access by using the random access configuration associated with the SS-block, the beam identifier may be a time index (time index), and the time index is indicated by using a PBCH in the SS-block. If the terminal device performs random access by using the random access configuration associated with the CSI-RS, the beam identifier may be a configuration identifier of the CSI-RS, for example, an index or the like.

S306. The terminal device determines the receiving parameter of the first data.

The step is the same as S201, and details are not described herein again.

S307. The network device sends a contention resolution message to the terminal device by using the sending parameter of the first data, where the contention resolution message is used to instruct the terminal device to determine success of contention resolution of random access or success of random access.

Correspondingly, the terminal device receives the contention resolution message by using the receiving parameter of the first data. In other words, if the terminal receives a message by using a receiving parameter that is not of the first data, for example, the message is a PDCCH carrying a C-RNTI, the terminal device cannot determine success of contention resolution or success of random access based on the message.

The step is the same as S202, and details are not described herein again.

S308. The terminal device determines success of contention resolution of random access or success of random access based on the contention resolution message.

The step is the same as S203, and details are not described herein again.

It should be noted that, this application is not limited to the foregoing performing sequence. A person skilled in the art may understand that step S303 can be performed after step S302 and before S307, and S306 can be performed before S307. A specific performing sequence is not limited in this application.

Optionally, based on the foregoing embodiments, the random access method may further include: receiving, by the terminal device, indication information sent by the network device, where the indication information is used to trigger the terminal device to perform random access. Optionally, the indication information is carried by using physical layer signaling. The physical layer signaling is, for example, a PDCCH order.

Optionally, the indication information includes at least one first identifier. The at least one first identifier is used to instruct the terminal device to determine the random access time-frequency resource. For example, the first identifier may be a time index (time index).

Further, the first identifier is further used to identify the SS-block and/or the CSI-RS. Specifically, the first identifier is used to identify the CSI-RS, and it may be understood that the first identifier is used to identify configuration of the CSI-RS. The configuration of the CSI-RS includes a time-frequency resource of the CSI-RS. Alternatively, the configuration of the CSI-RS may further include at least one of the following: a sequence, a port, and the like of the CSI-RS.

Optionally, the indication information may further include a second identifier. The second identifier is used to instruct the terminal device to determine the receiving parameter used to receive the random access response, and the second identifier may specifically be a configuration identifier of the CSI-RS. The configuration of the CSI-RS includes the time-frequency resource of the CSI-RS. The receiving parameter may be a receiving beam, an antenna parameter, and the like that are associated with the CSI-RS.

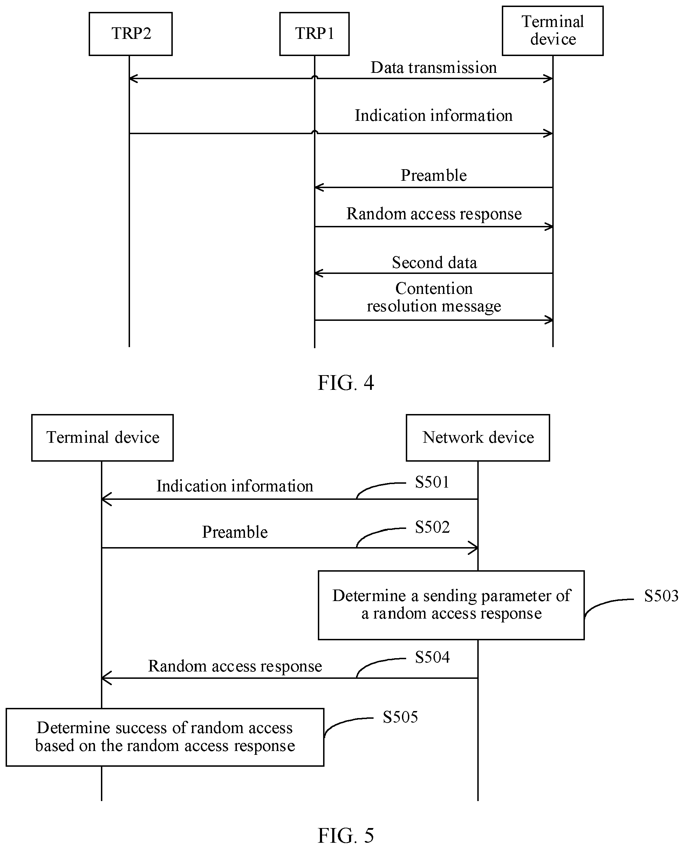

The following describes an application of the random access method provided in the foregoing embodiments by using FIG. 4 as an example.

As shown in FIG. 4, a cell under one base station includes two TRPs: a TRP 1 and a TRP 2. A terminal device and the TRP 2 are performing data transmission. Primary synchronization signals and/or secondary synchronization signals included in SS-blocks sent by the TRP 1 and the TRP 2 are same. The terminal device receives indication information sent by the base station by using the TRP 2. The indication information is used to trigger the terminal device to perform random access, to obtain uplink timing advance of a terminal-TRP 1. The indication information, for example, may be a PDCCH order. Specifically, the terminal device sends a preamble to the TRP 1; the terminal device receives a random access response from the TRP 1; the terminal device sends second data to the TRP 1; and if the random access is contention-based, the terminal device receives a message sent by the base station from the TRP 1, for example, the message is a PDCCH carrying a C-RNTI. In this case, the message is a contention resolution message, and the terminal device determines success of contention resolution of random access or success of random access based on the contention resolution message. When the terminal device receives a message sent by the base station by using the TRP 2, for example, the message is a PDCCH carrying a C-RNTI, the terminal device cannot determine success of contention resolution or success of random access based on the message.

The foregoing embodiment is contention-based random access. In non-contention based random access, because a preamble is dedicated for a particular terminal device, there is no contention; and because the terminal device has owned a unique identifier, such as a C-RNTI in an access cell, a network device does not need to allocate an identifier for the terminal device. Therefore, the non-contention based random access only includes: sending, by the terminal device, the preamble to the network device; and receiving, by the terminal device, a random access response sent by the network device.

It should be noted that: (1) The terminal device performing network access by using the non-contention based random access is originally in an RRC _CONNECTED state; (2) When switching, a C-RNTI used by the terminal device in a target cell is configured by using an identifier (UE-Identity) of a new terminal device of mobility control information (MobilityControlInfo) in RRC connection configuration.

The following describes a non-contention based random access method provided in this application by using specific embodiments.

FIG. 5 is a signaling interworking diagram of a random access method according to another embodiment of this application. Referring to FIG. 5, the random access method includes the following steps. S501. A terminal device receives indication information sent by a network device.

The indication information is used to trigger the terminal device to perform random access. The indication information includes at least one first identifier. The at least one first identifier is used to instruct the terminal device to determine a random access time-frequency resource. For example, the first identifier may be a time index (time index), and the time index is indicated by using a physical broadcast channel of an SS-block.

Optionally, the indication information is carried by using physical layer signaling. The physical layer signaling is, for example, a PDCCH order.

This step is optional.

Further, the first identifier is further used to identify an SS-block and/or a CSI-RS. Specifically, the first identifier is used to identify the CSI-RS, and it may be understood that the first identifier is used to identify configuration of the CSI-RS. The configuration of the CSI-RS includes a time-frequency resource of the CSI-RS. Alternatively, the configuration of the CSI-RS may further include at least one of the following: a sequence, a port, and the like of the CSI-RS.

S502. The terminal device sends a preamble to the network device on a random access time-frequency resource associated with the first identifier.

S503. The network device determines a sending parameter of a random access response.

The sending parameter of the random access response is the same as a sending parameter of the CSI-RS on at least one random access time-frequency resource. The random access response corresponds to the preamble received by the network device. The sending parameter of the random access response may specifically be one or more of an angle of departure, an angle of direction, power angular spectrum of the angle of departure, a transmit/receive channel correlation, transmit/receive beamforming, a spatial channel correlation, and the like.

S504. The terminal device receives the random access response sent by the network device based on a second identifier.

Optionally, the indication information may further include the second identifier. The second identifier is used to instruct the terminal device to determine a receiving parameter used to receive the random access response, and the second identifier may specifically be a configuration identifier of the CSI-RS. The configuration of the CSI-RS includes the time-frequency resource of the CSI-RS. The receiving parameter of the random access response may be a receiving beam, an antenna parameter, and the like that are associated with the CSI-RS.

S505. The terminal device determines success of random access based on the random access response.

In this embodiment, the terminal device determines the random access time-frequency resource based on the first identifier included in the indication information, and sends the preamble to the network device on the random access time-frequency resource; correspondingly, after receiving the preamble, the network device\ determines the sending parameter of the random access response; further, the terminal device determines the receiving parameter of the random access response based on the second identifier included in the indication information, and receives the random access response sent by the network device by using the receiving parameter, so that the terminal device determines the success of random access in a multi-TRP scenario. For example, the indication information is sent by using a TRP 2, to instruct the terminal device to send the preamble to a TRP 1; and then the terminal device receives the random access response from the TRP 1.

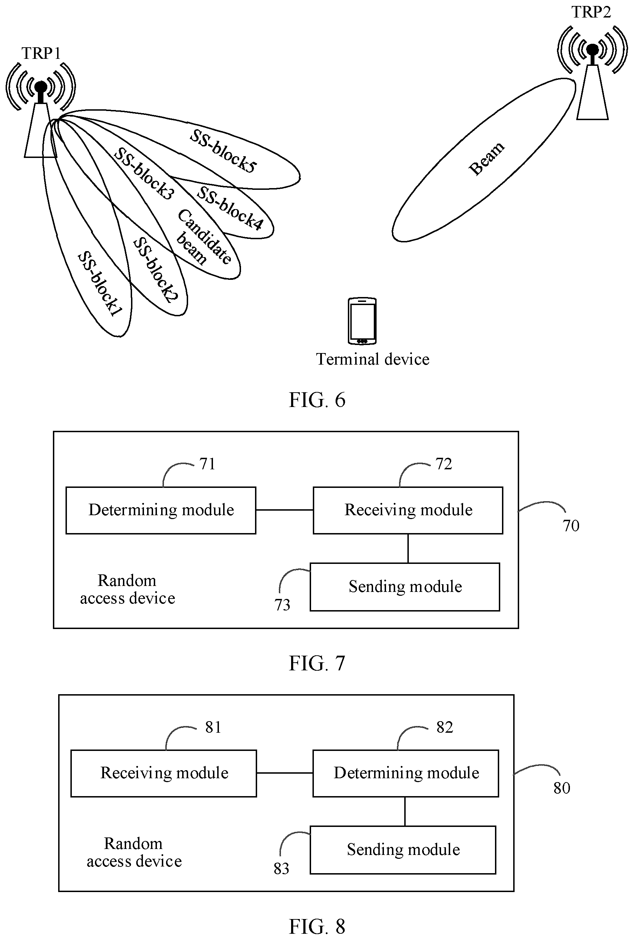

The following describes an application of the random access method provided in the embodiment shown in FIG. 5 by using FIG. 6 as an example.

As shown in FIG. 6, one cell under one base station includes two TRPs: a TRP 1 and a TRP 2. A terminal device and the TRP 2 are performing data transmission. Primary synchronization signals and/or secondary synchronization signals included in SS-blocks sent by the TRP 1 and the TRP 2 are the same. The terminal device receives indication information sent by the base station by using the TRP 2 in a form of a beam. The indication information is used to trigger the terminal device to perform random access, to obtain uplink timing advance of a terminal-TRP 1. The indication information may be carried in a PDCCH order. Further, the indication information is further used to instruct the terminal device to perform random access on a random access time-frequency resource (namely a candidate beam) corresponding to an SS-block 3. The TRP 1 includes a plurality of SS-blocks, including an SS-block 1, an SS-block 2, the SS-block 3, an SS-block 4, and an SS-block 5. Still further, the indication information may further include a receiving parameter that corresponds to the CSI-RS and that is used to receive the random access response.

FIG. 7 is a schematic structural diagram of a random access device according to an embodiment of this application. As shown in FIG. 7, the random access device 70 includes: a determining module 71 and a receiving module 72.

The determining module 71 is configured to determine a receiving parameter of first data.

The receiving module 72 is configured to receive a contention resolution message by using the receiving parameter.

The determining module 71 is further configured to determine success of contention resolution of random access or success of random access based on the contention resolution message.

The first data is at least one of the following data: an SS-block, a PBCH, a CSI-RS, downlink control information of a random access response, a random access response, and the like.

Optionally, the receiving parameter may include at least one of the following parameters: an angle of arrival, a dominant angle of arrival, an average angle of arrival, power angular spectrum of the angle of arrival, an angle of direction, power angular spectrum of an angle of departure, a transmit/receive channel correlation, transmit/receive beamforming, a spatial channel correlation, and the like.

Optionally, the contention resolution message may be a downlink control channel carrying an identifier of a terminal device.

Optionally, the receiving module 72 may further be configured to: before receiving the contention resolution message by using the receiving parameter, receive configuration information sent by a network device. The configuration information includes at least one piece of random access configuration, and a correlation between the first data and the random access configuration. The random access configuration may include a random access time-frequency resource, a preamble index, and/or the like.

In an implementation, the random access device 70 may further include: a sending module 73, configured to, before the receiving module 72 receives the contention resolution message by using the receiving parameter, send a preamble to the network device based on the random access configuration on the random access time-frequency resource. There is a correspondence between the preamble and the preamble index.

Further, the receiving module 72 may further be configured to: before receiving the contention resolution message by using the receiving parameter, receive a random access response sent by the network device. A receiving parameter of the random access response is the same as the receiving parameter of the first data, and/or a receiving parameter of downlink control information of the random access response is the same as the receiving parameter of the first data.

The apparatus described in this embodiment may be configured to perform the technical solutions that are in the foregoing method embodiments and that are executed by the terminal device or a chip inside the terminal device. The implementation principles and technical effects are similar, and for functions of each module, refer to corresponding descriptions in the method embodiments. Details are not described herein again.

FIG. 8 is a schematic structural diagram of a random access device according to another embodiment of this application. As shown in FIG. 8, a random access device 80 includes a receiving module 81, a determining module 82, and a sending module 83.

The receiving module 81 is configured to receive a preamble sent by a terminal device on a random access time-frequency resource.

The determining module 82 is configured to determine a sending parameter of first data based on the random access time-frequency resource and/or the preamble.

The sending module 83 is configured to send a contention resolution message to the terminal device by using the sending parameter, where the contention resolution message is used to instruct the terminal device to determine success of contention resolution of random access or success of random access.

The first data may be at least one of the following data: an SS-block, a PBCH, a CSI-RS, downlink control information of a random access response, a random access response, and the like.

Optionally, the determining module 82 may specifically be configured to: determine random access configuration based on the preamble and/or the random access time-frequency resource, where there is a correspondence between the preamble and a preamble index; and determine the sending parameter of the first data based on the random access configuration and a correlation between the first data and the random access configuration.

Optionally, the sending parameter may include at least one of the following parameters: an angle of departure, an angle of direction, power angular spectrum of the angle of departure, a transmit/receive channel correlation, transmit/receive beamforming, a spatial channel correlation, and the like.

Optionally, the contention resolution message may be a downlink control channel carrying an identifier of the terminal device.

Based on the foregoing description, the sending module 83 may further be configured to: before sending the contention resolution message to the terminal device by using the sending parameter, send configuration information to the terminal device. The configuration information includes at least one piece of random access configuration, and a correlation between the first data and the random access configuration. The random access configuration may include the random access time-frequency resource, the preamble index, and/or the like.

Further, the sending module 83 may further be configured to: before sending the contention resolution message to the terminal device by using the sending parameter, send a random access response to the terminal device. A sending parameter of the random access response is the same as the sending parameter of the first data, and/or a sending parameter of the downlink control information of the random access response is the same as the sending parameter of the first data.

The apparatus described in this embodiment may be configured to perform the technical solutions that are in the foregoing method embodiments and that are executed by the network device or a chip inside the network device. The implementation principles and technical effects are similar, and for functions of each module, refer to corresponding descriptions in the method embodiments. Details are not described herein again.

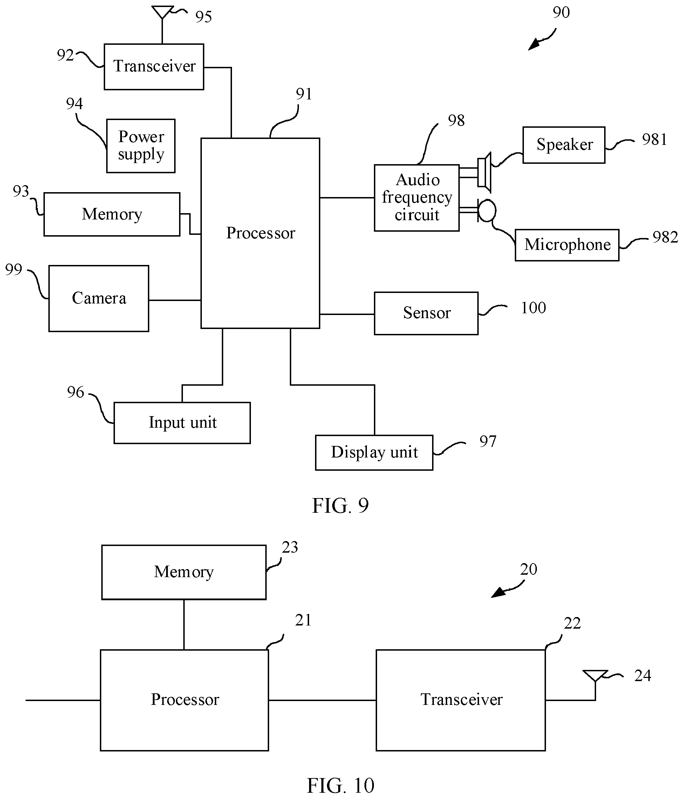

With reference to FIG. 9, the following describes a random access device provided in an embodiment of this application from a perspective of a network device and a terminal device.

As shown in FIG. 9, the terminal device 90 provided in this embodiment of this application includes at least a processor 91 and a transceiver 92.

The terminal device may further include a memory 93, storing a computer execution instruction.

The processor 91 is configured to determine a receiving parameter of first data and send an indication to the transceiver 92; the transceiver 92 is configured to receive a contention resolution message by using the receiving parameter based on the indication of the processor; and the processor 91 is further configured to determine success of contention resolution of random access or success of random access based on the contention resolution message. The first data is at least one of the following data: an SS-block, a PBCH, a CSI-RS, downlink control information of a random access response, a random access response, and the like.

The processor 91 may be configured to perform actions that are implemented inside the terminal device and that are described in the foregoing method embodiments, and the transceiver 92 may be configured to perform the transmission to the network device, sending, or receiving actions performed by the terminal device described in the foregoing method embodiments. For details, refer to the description in the foregoing method embodiments, and details are not described herein again.

In addition, it should be noted that the contention resolution message may be a downlink control channel carrying an identifier of the terminal device, or the contention resolution message carries some or all information of a message 3 sent by the terminal device, to specify a terminal device succeeding in contention of the random access, and the downlink control channel is used to transmit downlink assignment and/or uplink grant. If the contention resolution message is the downlink assignment, the transceiver 92 receives downlink data based on the downlink assignment and sends a feedback of the downlink data to the network device, where the feedback is used to inform the network device whether the downlink data is successfully decoded by the terminal device 90; if the contention resolution message is uplink grant, the transceiver 92 sends uplink data to the network device based on the uplink grant; and if the contention resolution message is some or all information of the message 3 sent by the terminal device, the transceiver 92 sends a feedback of the contention resolution message to the network device, where the feedback is used to inform the network device that the contention resolution message is successfully decoded by the terminal device, and if the decoding is not successful, the transceiver 92 does not need to send the feedback to the network device.

The processor 91 and the memory 93 may be integrated into a processing apparatus, and the processor 91 is configured to execute program code stored in the memory 93, to implement the foregoing functions. In specific implementation, the memory 93 may also be integrated in the processor 91.

The terminal device may further include a power supply 94, configured to provide power to various components or circuits in the terminal device; and the terminal device may include an antenna 95, configured to send uplink data or uplink control signaling output by the transceiver 92 by using a wireless signal.

In addition, to make functions of the terminal device more comprehensive, the terminal device may further include one or more of an input unit 96, a display unit 97, an audio frequency circuit 98, a camera 99, a sensor 100, and the like, where the audio frequency circuit 98 may further include a speaker 981, a microphone 982, and the like.

As shown in FIG. 10, a network device 20 provided in this embodiment of this application includes at least a processor 21 and a transceiver 22.

In specific implementation, the network device may further include a memory 23, configured to store a computer execution instruction;
a transceiver 22, configured to receive a preamble sent by a terminal device on a random access time-frequency resource;
a processor 21, configured to determine a sending parameter of first data based on the random access time-frequency resource and/or the preamble and send an indication to the transceiver; where
the transceiver 22 is further configured to send a contention resolution message to the terminal device by using the sending parameter based on the indication of the processor 21, where the contention resolution message is used to instruct the terminal device to determine success of contention resolution of random access or success of random access.

The first data is at least one of the following data: an SS-block, a PBCH, a CSI-RS, downlink control information of a random access response, a random access response, and the like.

The processor 21 may be configured to perform actions that are implemented inside the network device and that are described in the foregoing method embodiments, and the transceiver 22 may be configured to perform the transmission to the terminal device, sending, or receiving actions performed by the network device described in the foregoing method embodiments. For details, refer to the description in the foregoing method embodiments, and details are not described herein again.

The processor 21 and the memory 23 may be integrated into a processing apparatus, and the processor 21 is configured to execute program code stored in the memory 23, to implement the foregoing functions. In specific implementation, the memory 23 may also be integrated in the processor 21.

The network device may further include an antenna 24, configured to send downlink data or signaling output by the transceiver 22 by using a wireless signal.

It should be noted that, the processor of the terminal device and the processor of the network device may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory of the terminal device and the memory of the network device may include a volatile memory (volatile memory), for example, a random access memory (random access memory, RAM), or may alternatively include a non-volatile memory (non-volatile memory), for example, a flash memory (flash memory), a hard disk drive (hard disk drive, HDD), or a solid-state drive (solid-state drive, SSD). The memory may further include a combination of the foregoing types of memories.

In the embodiments of this application, the terminal device can communicate with the network device through unlicensed transmission in a wireless manner. In addition, the terminal device may alternatively communicate with the network device through licensed spectrum resource transmission in a wireless manner.

The network device in the apparatus embodiments of this application may correspond to the network device in the method embodiments of this application, and the terminal device may correspond to the terminal device in the method embodiments of this application. Moreover, the foregoing and other operations and/or functions of each module of the network device and the terminal device are dedicated for implementing corresponding procedures in the foregoing method embodiments. For brevity, descriptions of the method embodiments of this application can be applicable to the apparatus embodiments, and details are not described herein again.

In the apparatus embodiments of this application, the terminal device receives the contention resolution message by using the receiving parameter of the first data, and determines success of contention resolution of random access or success of random access based on the contention resolution message. The first data is at least one of the following data: an SS-block, a CSI-RS, downlink control information of a random access response, and a random access response, so that for a multi-TRP scenario, the terminal device can pertinently distinguish whether the received contention resolution message is a contention resolution message corresponding to current random access. On the one hand, the terminal device does not continue performing random access after receiving the contention resolution message corresponding to the current random access, that is, in the random access procedure, a random access preamble is not sent to the network device any more; on the other hand, the terminal device is enabled to continue performing random access before receiving the contention resolution message corresponding to the current random access, for example, waiting the contention resolution message corresponding the current random access or resending the random access preamble to the network device, to implement success of the contention resolution of the random access or success of the random access by the terminal device for the multi-TRP scenario.

This application further provides a terminal device, including a memory, a processor, and a computer program that is stored on the memory and that can be executed by the processor. The processor executes the computer program to implement the steps performed by the terminal device in the foregoing method embodiments.

This application further provides a network device, including a memory, a processor, and a computer program that is stored on the memory and can be executed by the processor. The processor executes the computer program to implement the steps performed by the network device in the foregoing method embodiments.

This application further provides a terminal device, including at least one processing element (or chip) configured to perform the method according to the first aspect.

This application further provides a network device, including at least one processing element (or chip) configured to perform the method according to the second aspect.

This application further provides a computer program. When executed by a processor of a terminal device, the program is configured to perform the steps performed by the terminal device in the foregoing method embodiments.

This application further provides a computer program. When executed by a processor of a network device, the program is configured to perform the steps performed by the network device in the foregoing method embodiments.

This application further provides a computer program product, the computer program product includes a computer program (namely an execution instruction), and the computer program is stored in a readable storage medium. At least one processor of a terminal device or a network device may read the computer program from the readable storage medium, and the at least one processor implements the computer program, so that the terminal device or the network device is enabled to perform the random access method provided in the foregoing various implementations.

This application further provides a computer readable storage medium. When an instruction in the computer readable storage medium is executed by a processor of a terminal device, the terminal device is enabled to perform the steps performed by the terminal device in any one of the foregoing method embodiments.

This application further provides a computer readable storage medium. When an instruction in the computer readable storage medium is executed by a processor of a network device, the network device is enabled to perform the steps performed by the network device in any one of the foregoing method embodiments.

This application further provides a communications system, including the terminal device shown in FIG. 9 and the network device shown in FIG. 10.

A person of ordinary skill in the art may be aware that, in combination with the examples described in the embodiments disclosed in this specification, units and algorithm steps may be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A random access method, comprising:
determining, by a terminal device, a receiving parameter of first data;
receiving, by the terminal device, a contention resolution message by using the receiving parameter; and
determining, by the terminal device, success of contention resolution of random access or success of random access based on the contention resolution message, wherein
the first data is at least one of the following data:
a synchronization signal block SS-block, a physical broadcast channel PBCH, a channel state information-reference signal CSI-RS, downlink control information of a random access response, or a random access response.

2. The method according to claim 1, wherein the receiving parameter comprises at least one of the following parameters:
an angle of arrival AoA, a dominant angle of arrival, an average angle of arrival, power angular spectrum of the angle of arrival, an angle of direction, power angular spectrum of an angle of departure, a transmit/receive channel correlation, transmit/receive beamforming, and a spatial channel correlation.

3. The method according to claim 1 or 2, wherein the contention resolution message is a downlink control channel carrying an identifier of the terminal device.

4. The method according to any one of claims 1 to 3, wherein before the receiving, by the terminal device, a contention resolution message by using the receiving parameter, the method further comprises:
receiving, by the terminal device, configuration information sent by a network device, wherein the configuration information comprises at least one piece of random access configuration and a correlation between the first data and the random access configuration, and the random access configuration comprises a random access time-frequency resource and/or a preamble index.

5. The method according to claim 4, wherein before the receiving, by the terminal device, a contention resolution message by using the receiving parameter, the method further comprises:
sending, by the terminal device, a preamble to the network device based on the random access configuration on the random access time-frequency resource, wherein there is a correspondence between the preamble and the preamble index.

6. The method according to any one of claims 1 to 5, wherein before the receiving, by the terminal device, a contention resolution message by using the receiving parameter, the method further comprises:
receiving, by the terminal device, the random access response sent by the network device, wherein a receiving parameter of the random access response is the same as the receiving parameter of the first data, and/or a receiving parameter of the downlink control information of the random access response is the same as the receiving parameter of the first data.

7. A random access method, comprising:
receiving, by a network device, a preamble sent by a terminal device on a random access time-frequency resource;
determining, by the network device, a sending parameter of first data based on the random access time-frequency resource and/or the preamble; and
sending, by the network device, a contention resolution message to the terminal device by using the sending parameter, wherein the contention resolution message is used to instruct the terminal device to determine success of contention resolution of random access or success of random access, wherein
the first data is at least one of the following data:
a synchronization signal block SS-block, a physical broadcast channel PBCH, a channel state information-reference signal CSI-RS, downlink control information of a random access response, or a random access response.

8. The method according to claim 7, wherein the determining, by the network device, a sending parameter of first data based on the random access time-frequency resource and/or the preamble comprises:
determining, by the network device, random access configuration based on the preamble and/or the random access time-frequency resource, wherein there is a correspondence between the preamble and a preamble index; and
determining, by the network device, the sending parameter of the first data based on the random access configuration and a correlation between the first data and the random access configuration.

9. The method according to claim 7 or 8, wherein the sending parameter comprises at least one of the following parameters:
an angle of departure, an angle of direction, power angular spectrum of the angle of departure, a transmit/receive channel correlation, transmit/receive beamforming, and a spatial channel correlation.

10. The method according to any one of claims 7 to 9, wherein the contention resolution message is a downlink control channel carrying an identifier of the terminal device.

11. The method according to any one of claims 7 to 10, wherein before the sending, by the network device, a contention resolution message to the terminal device by using the sending parameter, the method further comprises:
sending, by the network device, configuration information to the terminal device, wherein the configuration information comprises at least one piece of random access configuration and a correlation between the first data and the random access configuration, and the random access configuration comprises a random access time-frequency resource and/or a preamble index.

12. The method according to any one of claims 7 to 11, wherein before the sending, by the network device, a contention resolution message to the terminal device by using the sending parameter, the method further comprises:
sending, by the network device, the random access response to the terminal device, wherein a sending parameter of the random access response is the same as the sending parameter of the first data, and/or a sending parameter of the downlink control information of the random access response is the same as the sending parameter of the first data.

13. A terminal device, comprising:
a processor, configured to determine a receiving parameter of first data and send an indication to a transceiver;
a transceiver, configured to receive a contention resolution message based on the indication of the processor by using the receiving parameter; and
the processor, further configured to determine success of contention resolution of random access or success of random access based on the contention resolution message, wherein
the first data is at least one of the following data:
a synchronization signal block SS-block, a physical broadcast channel PBCH, a channel state information-reference signal CSI-RS, downlink control information of a random access response, or a random access response.

14. The terminal device according to claim 13, wherein the receiving parameter comprises at least one of the following parameters:
an angle of arrival AoA, a dominant angle of arrival, an average angle of arrival, power angular spectrum of the angle of arrival, an angle of direction, power angular spectrum of an angle of departure, a transmit/receive channel correlation, transmit/receive beamforming, and a spatial channel correlation.

15. The terminal device according to claim 13 or 14, wherein the contention resolution message is a downlink control channel carrying an identifier of the terminal device.

16. The terminal device according to any one of claims 13 to 15, wherein the transceiver is further configured to:
before receiving the contention resolution message by using the receiving parameter, receive configuration information sent by a network device, wherein the configuration information comprises at least one piece of random access configuration and a correlation between the first data and the random access configuration, and the random access configuration comprises a random access time-frequency resource and/or a preamble index.

17. The terminal device according to claim 16, wherein the transceiver is further configured to:
before receiving the contention resolution message by using the receiving parameter, send a preamble to the network device based on the random access configuration on the random access time-frequency resource, wherein there is a correspondence between the preamble and the preamble index.

18. The terminal device according to any one of claims 13 to 17, wherein the transceiver is further configured to:
before receiving the contention resolution message by using the receiving parameter, receive the random access response sent by the network device, wherein a receiving parameter of the random access response is the same as the receiving parameter of the first data, and/or a receiving parameter of the downlink control information of the random access response is the same as the receiving parameter of the first data.

19. A network device, comprising:
a transceiver, configured to receive a preamble sent by a terminal device on a random access time-frequency resource;
a processor, configured to determine a sending parameter of first data based on the random access time-frequency resource and/or the preamble, and send an indication to the transceiver; and
the transceiver, further configured to send a contention resolution message to the terminal device by using the sending parameter based on the indication of the processor, wherein the contention resolution message is used to instruct the terminal device to determine success of contention resolution of random access or success of random access, wherein
the first data is at least one of the following data:
a synchronization signal block SS-block, a physical broadcast channel PBCH, a channel state information-reference signal CSI-RS, downlink control information of a random access response, or a random access response.

20. The network device according to claim 19, wherein the processor is specifically configured to:
determine random access configuration based on the preamble and/or the random access time-frequency resource, wherein there is a correspondence between the preamble and a preamble index; and
determine the sending parameter of the first data based on the random access configuration and a correlation between the first data and the random access configuration.

21. The network device according to claim 19 or 20, wherein the sending parameter comprises at least one of the following parameters:
an angle of departure, an angle of direction, power angular spectrum of the angle of departure, a transmit/receive channel correlation, transmit/receive beamforming, and a spatial channel correlation.

22. The network device according to any one of claims 19 to 21, wherein the contention resolution message is a downlink control channel carrying an identifier of the terminal device.

23. The network device according to any one of claims 19 to 22, wherein the transceiver is further configured to:
before sending the contention resolution message to the terminal device by using the sending parameter, send configuration information to the terminal device, wherein the configuration information comprises at least one piece of random access configuration and a correlation between the first data and the random access configuration, and the random access configuration comprises the random access time-frequency resource and/or the preamble index.

24. The network device according to any one of claims 19 to 23, wherein the transceiver is further configured to:
before sending the contention resolution message to the terminal device by using the sending parameter, send the random access response to the terminal device, wherein a sending parameter of the random access response is the same as the sending parameter of the first data, and/or a sending parameter of the downlink control information of the random access response is the same as the sending parameter of the first data.

25. A terminal device, comprising a memory, a processor, and a computer program that is stored on the memory and that can be executed by the processor, wherein
the processor executes the computer program to implement a step of the random access method according to any one of claims 1 to 6.

26. A network device, comprising a memory, a processor, and a computer program that is stored on the memory and that can be executed by the processor, wherein
the processor executes the computer program to implement a step of the random access method according to any one of claims 7 to 12.

27. A communications system, comprising the terminal device according to any one of claims 13 to 18 and the network device according to any one of claims 19 to 24.

28. A terminal device, configured to perform the method according to any one of claims 1 to 6.

29. A computer readable storage medium, comprising an instruction, wherein when the instruction runs on a computer, the computer is enabled to perform the method according to any one of claims 1 to 6.

30. A computer program product, comprising computer program code, wherein when the computer program code runs on a computer, the computer is enabled to perform the method according to any one of claims 1 to 6.

31. A chip, comprising a memory and a processor, wherein the memory is configured to store a computer program, and the processor is configured to invoke and run the computer program from the memory, so that the processor is enabled to perform the method according to any one of claims 1 to 6.

32. A network device, configured to perform the method according to any one of claims 7 to 11.

33. A computer readable storage medium, comprising an instruction, wherein when the instruction runs on a computer, the computer is enabled to perform the method according to any one of claims 7 to 11.

34. A computer program product, comprising computer program code, wherein when the computer program code runs on a computer, the computer is enabled to perform the method according to any one of claims 7 to 11.

35. A chip, comprising a memory and a processor, wherein the memory is configured to store a computer program, and the processor is configured to invoke and run the computer program from the memory, so that the processor is enabled to perform the method according to any one of claims 7 to 11.
